# NEUE EUROPÄISCHE PATENTSCHRIFT

(11) **EP 0 503 124 B2**
(45) Veröffentlichungstag und Bekanntmachung des Hinweises auf die Entscheidung über den Einspruch: **02.04.2008**
(45) Hinweis auf die Patenterteilung: 10.06.1998
(21) Anmeldenummer: 91104029.3
(22) Anmeldetag: 15.03.1991
(51) Int. Cl.: C08L 23/02, C08L 23/22, C08L 23/06, B65D 51/16, B65D 53/06

(54) **Gefässverschluss mit einem Dichtungselement aus einem Polymercompound**
Container closure with a gasket made from a polymer composition
Récipient contenant un joint pour fermeture préparé d' un composition polymère

(43) Veröffentlichungstag der Anmeldung: 16.09.1992
(73) Patentinhaber: ACTEGA DS GmbH, 28219 Bremen (DE)
(72) Erfinder: Kuhn, Tino, Dr., W-2800 Bremen 1 (DE); Schlenk, Georg, Dr., W-2805 Stuhr 3 (DE)
(74) Vertreter: Maiwald, Walter

(56) Entgegenhaltungen:
- EP-A1- 0 129 310
- EP-A1- 0 370 272
- AU-A- 439 947
- DE-A1- 2 902 859
- GB-A- 1 112 025

## Beschreibung

Die Erfindung betrifft einen Gefäßverschluß mit einem Dichtungselement aus einem Polymercompound, insbesondere einen Kronenkork- oder Schraubverschluß, für Flaschen, Gläser und dergleichen, sowie ein solches Dichtungselement für Gefäßverschlüsse, insbesondere Flaschen- und Gläserverschlüsse aus Metall oder Kunststoff sowie die Verwendung des Polymercompounds.

Der Polymercompound besteht aus einem Gemisch von Butylkautschuk und einer Poly-α-Olefin-Komponente aus Polyethylen hoher Dichte (HDPE), einem Gleitmittel und üblichen Zusätzen wie Pigmente, Talkum und Stabilisatoren.

Gefäßverschlüsse müssen so ausgelegt sein, daß sie sich problemlos auf dem Gefäß anbringen lassen und dieses dennoch zuverlässig abdichten, während üblicherweise keine Sekundärbehandlung erforderlich sein sollte und wobei die Abmessungen der Gefäßöffnung sowie ihr Erhaltungszustand und Rauheit (beispielsweise im Fall von Mehrwegflaschen) erheblich unterschiedlich sein können. Es ist daher bereits seit langer Zeit bekannt, Gefäßverschlüsse, beispielsweise Kronenkorken, auf ihrem dem Gefäß zugewandten Inneren mit einem elastischen Dichtungselement zu versehen, wobei das Dichtungselement bei Aufsetzen des Verschlusses zwischen diesem Verschluß und dem Gefäß zusammengepreßt wird und daher Dichtigkeit gewährleistet.

Während früher die Einlagen von Kronenkorken oder Flaschenschraubverschlüssen vorwiegend aus Preßkork hergestellt wurden, der gegebenenfalls noch mit einem dünnen Kunststoffilm oder einer dünnen Aluminiumfolie beschichtet war, werden bereits seit einiger Zeit Dichtungselemente vollständig aus synthetischem Polymercompound hergestellt. Zu diesem Zweck eignen sich jedoch nur Polymercompounds, die dauerhaft und widerstandsfähig genug sind und gleichzeitig die erforderliche Elastizität aufweisen.

In der Praxis wird noch vorwiegend PVC in derartigen Compounds verwendet; es werden jedoch bereits Polyethylen und Gemische aus diesen Substanzen mit Vinylacetat oder Vinylacetat-Ethylen-Copolymeren verwendet.

Die Herstellung von Gefäßverschlüssen unter Verwendung derartiger Polymercompounds ist beispielsweise in der deutschen Auslegeschrift 20 33 064 und der deutschen Offenlegungsschrift 30 21 488 beschrieben.

Diese bekannten Polymercompounds jedoch weisen noch erhebliche Nachteile auf. Die Verwendung von PVC oder anderen halogen-enthaltenden Kunststoffen führt zu immer mehr Problemen bei der Beseitigung und Neutralisierung der gebrauchten Gefäßverschlüsse in Haushaltsabfällen. Bei der üblichen Verbrennung von Haushaltsabfall entstehen aus Halogenkunststoffen säurehaltige Gase, deren Entweichen in die Atmosphäre schädlich ist. Die Zugabe von Weichmachern mit geringem Molekulargewicht (beispielsweise Phthalaten), welche für die Einstellung der erforderlichen Dichtungseigenschaften unerläßlich ist, ist ebenfalls aus gesundheitlichen Gründen nicht unbedenklich, da diese Weichmacher teilweise wieder aus dem PVC freigesetzt werden und über in dem Gefäß enthaltene Lebensmittel oder Getränke in den menschlichen Körper gelangen. Aus diesem Grund sind dem Gehalt an Weichmachern in derartigen Polymermaterialien durch entsprechende Verordnungen Obergrenzen gesetzt.

Polyethylen allein ist in vielen Fällen als Dichtungsmaterial ungeeignet, insbesondere wenn Temperaturschwankungen oder beschädigte Gefäßöffnungen in Betracht gezogen werden müssen. Bekannte Polyethylen-Dichtungen sind außerdem aus Dichtigkeitsgründen für kohlensäurehaltige Getränke ungeeignet.

An Gefäßverschlüsse, insbesondere zum Beispiel Kronenkorken, Schraubverschlüsse und Schraubdeckel, welche üblicherweise aus Metall oder Kunststoff wie Polyolefinmaterial hergestellt sind und bei denen das Dichtungselement häufig die Form einer an das Verschlußinnere geklebten Einlage annimmt, werden die nachfolgenden Anforderungen gestellt:
- Gute Dichtungseigenschaften, insbesondere bei geringwertigen oder Mehrweg-Behältern. Die Einlage muß sich an eine beschädigte Oberfläche anpassen, um einen gas- bzw. flüssigkeitsdichten Verschluß zu gewährleisten.
- Bei Aufschraubverschlüssen muß der Verschluß geringe Schließ- und Öffnungsdrehmomente ergeben, um problemloses Verschließen im Abfüllwerk und leichtes Öffnen beim Endverbraucher zu ermöglichen.
- Das Produkt darf keinen Eigengeruch aufweisen, der auf den Gefäßinhalt übergehen kann.
- Das Einlagematerial muß eine gute Haftung am Verschlußkappenmaterial, insbesondere an Olefin-Materialien wie bei Verschlußkapppen aus Polypropylen oder Polyethylen, aufweisen, um eine gute Rückhaltung von Gasen wie z. B. Kohlensäure und Verschlußintegrität zu gewährleisten.
- Das Dichtungselement muß passend in den Verschluß eingesetzt werden, damit es in vollem Kontakt mit der Öffnung des Gefäßes steht. Es muß ebenfalls gewährleisten, daß bei verkanteten Verschlüssen die Integrität der Dichtung gesichert ist.
- Der Einsatz muß die Anforderungen der zuständigen Nahrungsmittelbehörde für Produkte in unmittelbarem Kontakt mit Lebensmitteln oder -produkten erfüllen. In einigen Ländern ist es aufgrund von Gesundheitsbedenken und Beseitigungsproblemen insbesondere bei Verbrennung nicht zulässig, daß derartige Dichtungselemente PVC oder ester-haltige Weichmacher enthalten.
- Die Einlage muß während ihrer Herstellung formbar sein, um verschiedene Profile passend für die verschiedenen Größen und Formen der Flaschen- oder Glasöffnung erzeugen zu können. Ebenso muß das Produkt ein gutes "plastisches Gedächtnis" für das Wiederverschließen der Flasche aufweisen.
- Der Verschluß und die Einlage müssen Nachbehandlungen wie Pasteurisierung, Heißfüllung, Kühlung, Transport, etc. standhalten können.
- Der Einsatz darf keine oberflächenaktiven Stoffe (die beispielsweise die Schaumstabilität von Bier beeinträchtigen) enthalten.
- Der Gesamtverschluß muß wirtschaftlich und bei maximalen Geschwindigkeiten herstellbar sein, gegenwärtig beispielsweise bis zu 2500 Verschlüsse in der Minute.

Speziell stellen sich heute für solche Verschlüsse zwei zusätzliche Aufgaben:
- Die Verschlüsse sollen bei Überdrücken im Gefäß, insbesondere bei Bier-, Brause- und Mineralwasserflaschen, eine Ventilwirkung haben;
- Die Verschlüsse sollen im Schließzustand den Zutritt aromabeeinflussender, insbesondere geschmacksbeeinträchtigender Substanzen in das Gefäß verhindern.

Überdrücke im Gefäß können beispielsweise bei Überwärmung entstehen und dazu führen, daß das Gefäß zerbirst. Das hat nicht nur den Verlust des Inhaltes zur Folge, sondern stellt eine ganz erhebliche Verletzungsgefahr, insbesondere durch umherfliegende Glassplitter, dar. Die Ventilwirkung des Verschlusses soll dafür sorgen, daß der Überdruck (meist CO₂) rechtzeitig entweichen und so unschädlich gemacht werden kann.

Für Geschmacksbeeinträchtigungen des Inhaltes, insbesondere bei längerer Lagerung, werden hauptsächlich zwei Einflüsse verantwortlich gemacht, einerseits oxidative Aromaveränderungen nach Sauerstoffzutritt, andererseits Geschmacksveränderungen durch Eindringen anderer, insbesondere aromatischer Substanzen wie beispielsweise Benzole oder auch Phenylether, beispielsweise Chloranisole. Letztere sind in holzhaltigen Gegenständen wie Paletten, Kartons und dergleichen enthalten und reichern sich innerhalb von Verpackungen wie Schweißfolien, Schrumpffolien und dergleichen an. Diese Substanzen stehen im Verdacht, durch herkömmliche Polymercompound-Dichtungen in das Innere von Gefäßen eindringen zu können. Sie verursachen bereits im ppm-Bereich starke Geschmacksveränderungen.

Zur Vermeidung des Sauerstoff zutritts sind bereits Dichtungselemente vorgeschlagen worden, die sauerstoffbindende Substanzen (Sauerstoffrezeptoren) enthalten. Diese Substanzen sollen den eindringenden Sauerstoff im Dichtungselement festhalten, so daß er nicht an den Gefäßinhalt gelangt. Allerdings sind Sauerstoffrezeptoren bislang für Produkte mit direktem Lebensmittelkontakt nicht zugelassen und haben oft selbst keine einwandfreien sensorischen Eigenschaften.

Aus der DE-OS 15 44 989 sind Dichtungseinlagen für Behälterverschlüsse bekannt, die aus einer Vielzahl von Compounds bestehen können. Unter anderem sind auch Butyl-Kautschuk/ Polyethylen-Gemische beschrieben, die zusätzlich EVA-Copolymer enthalten können. Die Zusammensetzungsbereiche sind breit; bevorzugt wird für Polyethylen/Butylkautschuk/EVA-Gemische eine Zusammensetzung im Verhältnis 2:2:1. Dieser Stand der Technik verwendet Polyethylen niederer Dichte (LDPE), um ein besonders hochgradiges Dichtungs- und Druckhaltevermögen über lange Zeiträume bei erhöhter Temperatur zu gewährleisten. Derartige Compounds sind ebenfalls in der AU-A 439 947 beschrieben. Dichtungselemente aus diesen Compounds sind aber für eine Überdruckventilwirkung nicht geeignet. Andererseits lassen sich LDPE-Compounds nicht störungsfrei auf modernen Maschinen verarbeiten, insbesondere nicht beim In-Shell-Moulding, da sie beim Granulieren schmieren und klumpen und nach dem Extrudieren am Messer haften bleiben.

Es ist eine wesentliche Aufgabe der Erfindung, Gefäßverschlüsse mit Dichtungselementen aus Polymercompounds sowie solche Dichtungselemente anzugeben, die im Schließzustand des Gefäßverschlusses eine den Zutritt gas- oder dampfförmiger Substanzen wie Sauerstoff und andere geschmacksbeeinträchtigende Substanzen in das Gefäß verhindernde Barrierewirkung ermöglichen.

Es ist eine weitere wesentliche Aufgabe der Erfindung, Gefäßverschlüsse mit Dichtungselementen aus Polymercompounds und entsprechende Dichtungselemente anzugeben, die eine Überdruckventilwirkung bei Gefäßinnendrücken zwischen etwa 3 und 10 bar zeigen.

Insbesondere ist es eine wesentliche Aufgabe der Erfindung, Gefäßverschlüsse und Dichtungselemente anzugeben, die sowohl die genannte Barrierewirkung als auch die genannte Überdruckventilwirkung zeigen.

Dabei liegt eine weitere wesentliche Aufgabe der Erfindung darin, die vorstehend bereits genannten wesentlichen generellen Anforderungen an Dichtungselemente für Gefäßverschlüsse ebenfalls zu erfüllen.

Zur Lösung dieser Aufgabe dienen die Merkmale der unabhängigen Ansprüche.

Vorteilhafte Ausgestaltungen sind in den Unteransprüchen definiert.

Das Polymercompound, aus dem das Dichtungselement gemäß der Erfindung besteht, läßt sich aus leicht erhältlichen Rohmaterialien herstellen. Es läßt sich durch Maschinen, die bereits zur Weiterverarbeitung von vergleichbaren PVC-Materialien verfügbar sind und zum Beispiel von der Firma SACMI, Italien, hergestellt werden, weiterverarbeiten. Zur Verbesserung des Schneide- und Transportverhaltens des Polymercompounds kann vorteilhafterweise ein geringer Gehalt feinstdisperser Kieselsäure oder Amidwachs vorgesehen sein. Das weichgemachte Polymercompound läßt sich problemlos extrudieren, schneiden und anschließend druckverformen. Es härtet dann in der gewünschten Form aus.

Dieses Formteil, das aus dem Polymercompound hergestellt wurde und entweder an dem Gefäßverschluß haftet oder in ihn eingesetzt ist, hat bei guter Dimensionsstabilität eine Elastizität, die zur Sicherung der Dichtigkeit bei allen üblichen Anwendungen von Gefäßverschlüssen geeignet ist. Die Gefäße können bei geeigneten Anwendungen mit aufgesetztem Verschluß einer Pasteurisierung unterzogen werden, ohne daß hierbei das Dichtungsformteil beschädigt oder undicht gemacht wird.

Die erfindungsgemäßen Dichtungselemente ergeben zwischen etwa 3 und 10 bar eine Überdruckventilfunktion, indem sie bei Überschreitung eines gewissen Innendruckes im Gefäß elastisch nachgeben und das den Überdruck erzeugende Material (meist Kohlendioxid) entweichen lassen. Sobald der Innendruck wieder auf den vorgegebenen Wert abgefallen ist, bei dem die Ventilwirkung eintritt, schließt das Dichtungselement den Gefäßverschluß wieder völlig gasdicht an das Gefäß an. So kann vermieden werden, daß bei unvorhergesehenen und unerwünschten Überdrucken der Behälter zerbirst. Der Innendruck, bei dem die Überdruckventilfunktion auftritt, kann durch die Mischung des Compounds und gegebenenfalls dessen mechanische Eigenschaften beeinflussende Zusätze festgelegt werden.

Gleichzeitig zeigen die erfindungsgemäßen Dichtungselemente eine ausgeprägte Barrierewirkung gegen den Zutritt von beispielsweise Sauerstoff, Benzolen und Chloranisol in den Behälter. Diese Barrierewirkung hält über sehr lange Zeiträume unvermindert an und verhindert, daß beispielsweise bei in Schweißfolien oder Schrumpffolien verpackten, kartonierten oder palettierten Bierflaschen das Bier durch den Zutritt solcher Stoffe geschmacklich verändert wird.

Da das Polymercompound keine Weichmacher mit geringem Molekulargewicht enthält, ist es aus der Sicht der Lebensmittel-Verordnungen harmlos; gelangt es in Haushaltsabfall, kann es in einer Abfallverbrennungsanlage keine schädlichen Säuregase abgeben, da es halogenfrei ist.

Die Gefäßverschlüsse gemäß der Erfindung erfüllen die Verordnungen, wie sie beispielsweise in der DIN-Norm 6099 für Kronenkorken festgelegt sind.

Es versteht sich von selbst, daß das Polymercompound gemäß der Erfindung durch geeignete Wahl seiner Zusammensetzung den besonderen Anforderungen der verschiedenen Anwendungen angepaßt werden kann. Die Elastizität läßt sich beispielsweise durch den Gesamtanteil von Zusätzen beeinflußen, die die anfängliche Härte der verwendeten Komponenten verändern.

Die Verwendung des Polymercompounds gemäß der Erfindung bietet den weiteren Vorteil, daß die erzeugten Formteile leichter sein können als bekannte Dichtungselemente, beispielsweise aus PVC. Mit dem erfindungsgemäßen Polymercompound lassen sich daher zum Beispiel Inneneinlagen für Kronenkorken mit einem Gewicht von nur etwa 150 bis 160 mg herstellen, was eine nicht unbeträchtliche Materialersparnis im Vergleich zu bekannten Inneneinlagen aus PVC darstellt.

Es versteht sich, daß die Erfindung sich uneingeschränkt auf übliche Einlagedimensionen anwenden läßt, d.h. Einlagegewichte von zwischen ca. 150 und 250 mg für Kronenkorken; zwischen 220 und 320 mg für Aluminiumschraubverschlüsse, zwischen 250 und 400 mg für Kunststoffschraubkappen und sogar höhere Gewichte für größere Verschlüsse, als Schraubdeckel für Gläser etc..

Es ist insbesondere für mechanisch dichtende Flaschen- und Gefäßverschlüsse aus Metall oder Kunststoff, wie beispielsweise Kronenkorken und Schraubkappen erforderlich, daß das Dichtungselement, das die Einlage bildet, fest und seine gesamte Fläche am Verschluß sitzt. Ist dies nicht der Fall, kann bei beschädigten Gefäßöffnungen ein Verschieben oder Verdrehen der Einlage und als Folge hiervon Leckagen auftreten. Überdies verursachen bei schlechter Haftung der Einlage örtliche Verschiebungen feuchtigkeitsgefüllte Blasen, die die Korrosion von Metallverschlüssen fördern. Diese nachteiligen Wirkungen werden insbesondere von dem PE-Gehalt des Compounds wirkungsvoll unterdrückt.

Die Verwendung der erfindungsgemäßen Compounds hat den Vorteil, daß ein Gehalt an aromatischen Polymeren in dem Compound völlig vermieden wird. Styrolderivate, die bisweilen in ähnlichen Compounds enthalten sind, können den Geruch und Geschmack des verpackten Produktes nachteilig beeinträchtigen.

Das Fehlen von aromatischen Polymeren erhöht die Verarbeitungssicherheit, insbesondere bei verhältnismäßig hohen Temperaturen, durch Unterdrückung des Auftretens unerwünschter Monomerer oder Abbauprodukte.

Die Herstellung des Verschlusses mit Dichtungselement findet üblicherweise mittels des sogenannten "In-Shell Moulding"-Verfahrens statt, wie es beispielsweise bei HC-Industriemaschinen angewandt wird. Das Granulat des Compounds wird in einen Extruder gefüllt, der das Produkt schmilzt und anschließend zu einer Öffnung pumpt. Außerhalb dieser Öffnung befindet sich ein rotierendes Messer, das das Extrudat zu einem Kügelchen schneidet und dieses in den Verschluß hineinschleudert. Hier ergeben sich zwei wichtige Merkmale des neuen Compounds, nämlich keine Haftung an der Schneide und gute Schleudereigenschaften. Sind die Schleudereigenschaften nicht gut, dann landet das Kügelchen nicht mittig im Ver-schluß, was zu Leerräumen oder Graten bei der Formung führt. Durch die bei der Erfindung verwendeten Rohmaterialen sind diese wichtigen Faktoren gewährleistet.

Liegt das Kügelchen mittig in dem Verschluß, dann drückt ein Stempel mit passend gewähltem Profil das noch schmelzflüssige Kügelchen zusammen. Bei diesem Vorgang wird das Compound in dem Verschluß verteilt und ihm gleichzeitig das erforderliche Profil verliehen. Die Formbarkeit ist aus nachfolgenden Gründen ebenfalls ein besonderes Merkmal der neuen Dichtungselementformulierung: Das Produkt muß sich nicht nur gut formen lassen, sondern auch beim Abkühlen seine Dimensionsstabilität ohne Schrumpfung oder Veränderung beibehalten. Die neue erfindungsgemäße Zusammensetzung gewährleistet diese maßgeblichen Anforderungen.

Ein weiteres bedeutendes Merkmal des neuen Compounds besteht darin, daß die "In-Shell Moulding"-Maschinen nunmehr störungsfrei bei maximaler Geschwindigkeit und mit minimalen Ausschuß laufen können. Diese Eigenschaft ist auf das Polymergemisch zurückzuführen, das eine Erhöhung der Laufgeschwindigkeiten auf bis zu 2500 Verschlüsse pro Minute ermöglicht.

Im Abfüllwerk müssen die Verschlüsse mit Drehmomenten unterhalb 2,16 Nm (0,22 kpm), vorzugsweise unterhalb 1,67 Nm (0,17 kpm), auf die Flasche oder das Glas aufgeschraubt werden. Nach Verschließen der Flasche, die heiß oder kalt, gefüllt oder sogar pasteurisiert gewesen sein kann, muß das Dichtungselement seinen Zustand und seine Form beibehalten. Die meisten Flaschen werden vor Verbrauch in Kühlschränken auf ca. 4°C gekühlt, wobei ebenfalls kein Schrumpfen auftreten darf. Es ist selbstverständlich, daß der Transport oder die Lagerung in warmen Klimazonen keine übermäßige Ausdehnung oder Kriechung verursachen darf, welche zu einem Kohlensäureverlust führen würde.

Auf den Flascheninhalt darf kein Fremdgeruch, auch nicht aus dem Compound, übergehen. Dies zu vermeiden ist ein weiterer bedeutender Vorteil der Erfindung.

Die Erfindung wird nachstehend unter Bezugnahme auf die Ausführungsbeispiele weiter beschrieben, welche eine Inneneinlage für einen Flaschenkronenkorken aus Metall betreffen. Alle Angaben in Gew.-% beziehen sich, soweit nicht anders angegeben, auf das Gesamtgewicht des Compounds.

### Ausführungsbeispiel 1 (Referenzbeispiel):

Ein Polymercompound wird hergestellt, indem etwa 33 Gew.-% Butylkautschuk (im Handel unter der Bezeichnung "Polysar EER 101/3®" von Polysar erhältlich) mit etwa 33 Gew.-% HDPE ("Eraclene HVSG 5215 P®" von Enichem) und etwa 30 Gew.-% EVA-Copolymer ("Evatane 2805®" von ATO) vermischt werden. Das EVA-Copolymer hat einen relativen VA-Gehalt von ca. 10 %. Statt HDPE kann ein Gemisch von LDPE ("Lupolen 1800 S®" von BASF AG) und PP mit etwa gleicher Shore-Härte verwendet werden.

Zusätzlich zu diesen Bestandteilen werden dem Polymercompound geringe Mengen von weniger als jeweils 1 Gew.-% an feinstdispersem SiO₂ oder Siliconöl, Pigmente, Stabilisatoren und Erukasäureamid sowie 3,5 % Talkum zugesetzt. Der Siliziumgehalt trägt dazu bei, daß eine Haftung der geschnittenen Kügelchen oder Klumpens des Compounds am Messer verhindert wird.

Das auf diese Weise hergestellte Polymercompound wird auf eine HC-Maschine gegeben. In dieser Maschine läuft das Polymercompound zunächst in einen Extruder, in dem es geschmolzen wird. Es verläßt die Austrittsöffnung des Extruders als plastisches Extrudat, das unmittelbar hinter der Öffnung von einem Messer in Einzelklumpen geschnitten wird.

Ein jeder dieser Klumpen mit einem Gewicht von jeweils etwa 160 bis 180 mg wird auf die Innenfläche einer Drehverschlußkappe aus Polypropylen (PP) geschleudert. Das noch plastische Polymercompound wird von einem Gesenkstempel über diese Innenfläche verteilt und gepreßt, um ein dünnes, in etwa scheibenförmiges Formteil zu bilden. Gleichzeitig ist es möglich, jegliche etwa erwünschten ringförmigen Vorsprünge des Formteils auszubilden, welche den Flaschenrand im Bereich der Öffnung umgreifen, wenn die Kappe aufgeschraubt wird.

Nach Abkühlen und Aushärten des thermoplastischen Polymercompounds ist das Formteil, das die Inneneinlage bildet, unter normalen Gebrauchsbedingungen nicht mehr plastisch verformbar, sondern drückt mit elastischer Abdichtwirkung gegen den Flaschenrand, wenn die Kappe auf die Flasche aufgeschraubt wird. Aufgrund seiner Elastizität kann das Formteil daher Unebenheiten (beispielsweise aufgrund von Beschädigung) und auch die Rauhheit des Flaschenrandes aufgrund von Herstellungstoleranzen ausgleichen.

### Ausführungsbeispiel 2:

Ein Polymercompound wird hergestellt, indem etwa 48 Gew.-% Butylkautschuk mit etwa 48 Gew.-% HDPE vermischt werden. Auch in diesem Fall kann statt HDPE ein Gemisch etwa gleicher Shore-Härte von LDPE mit PP verwendet werden.

Weniger als jeweils 1 Gew.-% von feinstdispersem SiO₂ oder Siliconöl, Pigmente, Stabilisatoren und Erukasäureamid sowie 3,5 % Talkum werden dem Polymercompound zugesetzt.

Das auf diese Weise hergestellte Polymercompound wird in eine HC-Maschine gegeben, wo es zunächst in einen Extruder gelangt, in dem es geschmolzen wird. Es verläßt die Austrittsöffnung des Extruders als plastisches Extrudat, das von einem Messer unmittelbar hinter der Öffnung in einzelne Klumpen geschnitten wird.

Ein jeder dieser Klumpen mit einem Gewicht von etwa 220 bis 240 mg wird einzeln auf die Innenfläche einer Aluminiumkapsel geschleudert, die den Körper einer Schraubkappe bildet. Das noch plastische Polymercompound wird von einem Gesenkstempel über diese Innenfläche verteilt und gepreßt, um ein dünnes, in etwa scheibenförmiges Formteil zu bilden. Gleichzeitig werden etwa erwünschte ringförmige Vorsprünge des Formteiles ausgebildet, welche den Flaschenrand im Bereich der Öffnung umgreifen, wenn die Kappe aufgesetzt wird.

Nach Abkühlen und Aushärten des thermoplastischen Polymercompounds ist das Formteil, das die Inneneinlage der Kappe bildet, bei normalen Gebrauchsbedingungen nicht mehr plastisch verformbar, sondern drückt elastisch dichtend gegen den Flaschenrand, wenn die Kappe aufgeschraubt wird. Aufgrund seiner Elastizität kann das Formteil daher Unebenheiten (beispielsweise aufgrund von Beschädigung) und Rauheit aufgrund von Herstellungstoleranzen ausgleichen.

### Ausführungsbeispiele 3 und 4 (Referenzbeispiele)

Das Ausführungsbeispiel 2 wird wiederholt, wobei einmal 5 % und einmal 20 % Polyamid ("Vestamid®", erhältlich von Hüls AG) zugesetzt werden.

### Ausführungsbeispiel 5 (Referenzbeispiel)

Das Ausführungsbeispiel 2 wird wiederholt, wobei 40 Gew.-% Polyurethan (FDA-zugelassen) zugesetzt werden.

### Ausführungsbeispiel 6 (Referenzbeispiel)

Ein Polymercompound wird hergestellt, indem etwa 40 Gew.-% Butylkautschuk ("Polysar EER 101/3®") mit etwa 55 % EVA-Copolymer (10 % VA-Anteil, erhältlich von ATO unter der Bezeichnung "EVATANE 2805®") vermischt werden.

Weiterhin werden 4,9 % Talkum und 0,1 % Erukasäureamid als Gleitmittel zugesetzt.

### Ausführungsbeispiel 7 (Referenzbeispiel)

Das Ausführungsbeispiel 6 wird wiederholt, wobei 40 Gew.-% Polyurethan (FDA-zugelassen) zugesetzt werden.

### Ausführungsbeispiele 8 und 9 (Referenzbeispiel)

Das Ausführungsbeispiel 6 wird wiederholt, wobei einmal 5 Gew.-%, einmal 20 Gew.-% Polyamid ("Vestamid®" von Hüls AG) zugesetzt werden.

Die gemäß obigen Ausführungsbeispielen 1-9 erzeugten Gefäßverschlüsse zeigen sowohl eine ausgeprägte Barrierewirkung als auch Ventileigenschaften.

Auch über Zeiträume von einigen Monaten wird kein Durchtritt von Sauerstoff, Benzol oder Chloranisol in das Gefäßinnere beobachtet. Wenn der Innendruck im Gefäß gesteigert wird, lassen die erfindungsgemäß ausgestalteten Gefäßverschlüsse den Überdruck entweichen, bevor er auf gefährliche Werte ansteigt.

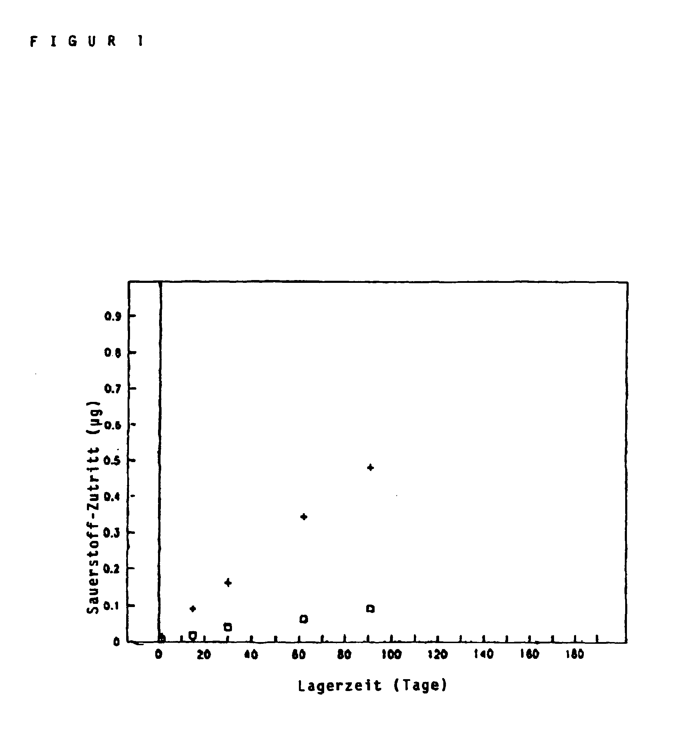

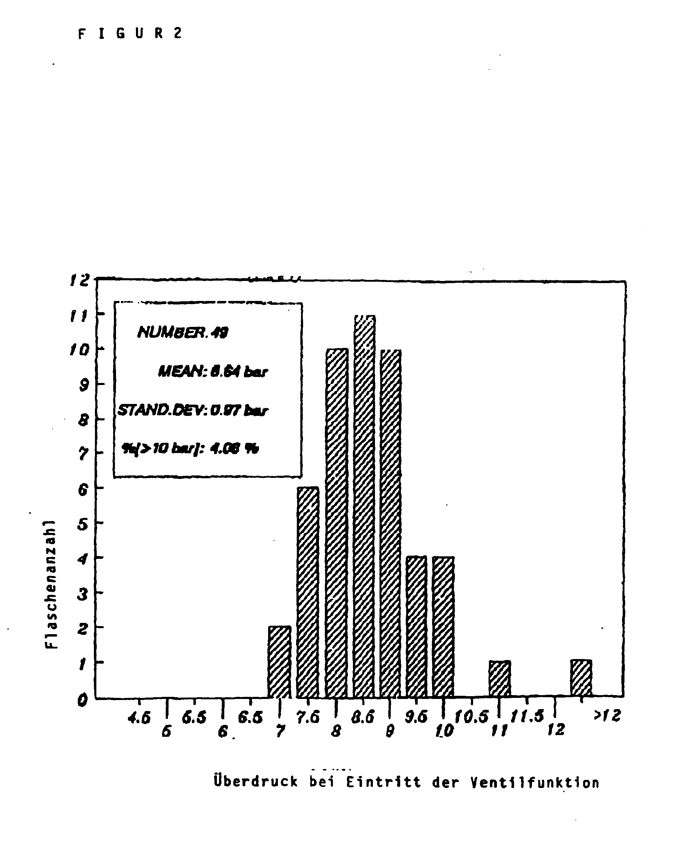

Die Fig. 1 und 2 zeigen die Ergebnisse von Versuchen, bei denen die Barrierewirkung (gegen Sauerstoff) mit einem "Orbisphere"-Gerät und die Ventileigenschaften gemäß den Standard-Lieferbedingungen der Brauereiindustrie gemessen wurden.

Die Fig. 1 zeigt den Sauerstoff-Zutritt mit der Zeit bei Mehrwegflaschen, wobei die Kreuze für eine Standard-PVC-Dichtung stehen und die Kästchen die Daten einer vergleichbaren, erfindungsgemäßen Dichtung (wie in Beispiel 1) anzeigen. Man erkennt sofort die wesentlich besseren Barriereeigenschaften der erfindungsgemäßen Dichtung.

Fig. 2 zeigt die Entwicklung der Druckdichtigkeit mit steigendem Innendruck, gemessen gemäß Standard-Lieferbedingungen an 49 Bier-Exportflaschen drei Wochen nach deren Verschluß mittels einer Simmonazzi-Maschine bei hoher Geschwindigkeit.

Wie man sieht, zeigen 96 % der Flaschen bei Innendrücken zwischen 7 und 10 bar die gewünschte Überdruckventilfunktion.

Durch geeignete Wahl der Bestandteile, die zur Modifikation der Härte hinzugefügt werden, kann das Polymercompound des Formteiles so ausgelegt sein, daß es sogar die erhöhte Temperatur aushalten kann, die während einer Pasteurisierung auftritt.

Die erfindungsgemäß hergestellten Verschlüsse sind nach Aushärten des Polymercompounds gebrauchsfertig und lassen sich bis zu ihrer Verwendung lagern; die Eigenschaften des Formteiles, das den Inneneinsatz bildet, verändern sich sogar über lange Zeiträume nicht.

Es ist selbstverständlich, daß - abgesehen von der hierin beschriebenen Verwendung in Verbindung mit Kronenkorken und Schraubkappen - andere Dichtungselemente für Gefäßverschlüsse ebenfalls hergestellt werden können, bei denen das entsprechende Formteil fest oder nicht fest mit dem Körper des Verschlusses verbunden oder verklebt ist.

## Patentansprüche

1. Gefäßverschluß mit einem Dichtungselement, insbesondere Kronenkork- oder Schraubenverschluß, für Flaschen, Gläser und dergleichen, der im Schließzustand eine Gas-Barrierewirkung und/oder eine Überdruckventilwirkung aufweist und bei dem das Dichtungselement aus einem Polymercompound besteht, bestehend aus einem Gemisch von Butylkautschuk und einer Poly-a-Olefin-Komponente aus Polyethylen hoher Dichte (HDPE), einem Gleitmittel und üblichen Zusätzen wie Pigmente, Talkum und Stabilisatoren.

2. Gefäßverschluß nach Anspruch 1,
**dadurch gekennzeichnet, daß** das Polymercompound einen Gehalt an Butylkautschuk von zwischen 20 Gew.-% und 60 Gew.-%, insbesondere zwischen 30 Gew.-% und 50 Gew.-%, bezogen auf Gesamtgewicht, aufweist.

3. Gefäßverschluß nach Anspruch 1 oder 2,
**dadurch gekennzeichnet, daß** das Polymercompound einen Gehalt an Poly-a-Olefin-Komponente von zwischen 20 Gew.-% und 70 Gew.-%, insbesondere zwischen 30 Gew.-% und 60 Gew.-%, bezogen auf Gesamtgewicht, aufweist.

4. Gefäßverschluß nach einem der Ansprüche 1 bis 3,
**dadurch gekennzeichnet, daß** das Polymercompound Butylkautschuk und die Poly-α-Olefin-Komponente in im wesentlichen gleichen Gewichtsanteilen, insbesondere im Verhältnis 1:1, enthält.

5. Gefäßverschluß nach einem der Ansprüche 1 bis 4,
**dadurch gekennzeichnet, daß** das Polymercompound als Gleitmittel feinstdisperses SiO₂, Siliconöl und/oder ein Amidwachs, insbesondere Erukasäureamid, enthält.

6. Gefäßverschluß nach Anspruch 1,
**dadurch gekennzeichnet, daß** das Polymercompound (in Gewichtsprozent, bezogen auf Gesamtgewicht) enthält:
| Substanz | generell | bevorzugt | besonders bevorzugt |
|---|---|---|---|
| Butylkautschuk | 40-60 | 45-52 | 48 |
| HDPE | 40-60 | 45-52 | 48 |
sowie jeweils weniger als 0,5 Gew.-% Gleitmittel, Pigment und Stabilisator und weniger als 5 Gew.-% Talkum.

7. Gefäßverschluß nach einem oder mehreren der Ansprüche 1 bis 6,
**dadurch gekennzeichnet, daß** das Dichtungselement als Inneneinlage auf einer dem Rand des abzudichtenden Gefäßes zugewandten Innenfläche des Gefäßverschlusses ausgebildet ist.

8. Gefäßverschluß nach Anspruch 7, in Form eines Kronenkorks,
**dadurch gekennzeichnet, daß** die Inneneinlage zwischen ungefähr 160 und 250 mg Polymercompound umfaßt.

9. Gefäßverschluß nach Anspruch 7, in Form einer Schraubkappe aus Aluminium für Flaschen,
**dadurch gekennzeichnet, daß** die Inneneinlage zwischen ungefähr 200 und 320 mg des Polymercompounds umfaßt.

10. Gefäßverschluß nach Anspruch 7, in Form eines Schraubverschlusses aus Kunststoffmaterial für Flaschen, **dadurch gekennzeichnet, daß** die Inneneinlage zwischen ungefähr 200 und 400 mg des Polymercompounds umfaßt.

11. Dichtungselement für Gefäßverschlüsse, insbesondere Flaschen- und Gläserverschlüsse aus Metall oder Kunststoff, bestehend aus einem Polymercompound gemäß einem oder mehreren der Ansprüche 1 bis 10.

12. Dichtungselement nach Anspruch 11,
**dadurch gekennzeichnet, daß** das Dichtungselement als Inneneinlage für einen Kronenkork- oder einen Flaschenschraubverschluß etwa kreisscheibenartig ausgebildet ist.

13. Dichtungselement nach Anspruch 11,
**dadurch gekennzeichnet, daß** das Dichtungselement als Dichtring ausgebildet ist.

14. Verwendung des Polymercompounds nach einem der Ansprüche 1 bis 6, in Gefäßverschlüssen als Barriere gegen den Zutritt von Sauerstoff.

## Claims

1. Container closure with a basket, in particular crown cap closure or screw closure, for bottles, glassware and the like, the closure in its closed condition having the effect of a gas barrier and/or of an excesspressure valve, and its gasket being composed of a polymer composition composed of a mixture of butyl rubber and a poly-α-olefin component made from high-density polyethylene (HDPE), of a lubricant and of usual additions, such as pigments, talc and stabilizers.

2. Container closure according to Claim 1,
**characterized in that** the polymer composition has a content of butyl rubber of between 20% by weight and 60% by weight, in particular between 30% by weight and 50% by weight, based on total weight.

3. Container closure according to Claim 1 or 2,
**characterized in that** the polymer composition has a content of poly-α-olefin component of between 20% by weight and 70% by weight, in particular between 30% by weight and 60% by weight, based on total weight.

4. Container closure according to any one of Claims 1 to 3,
**characterized in that** the polymer composition contains butyl rubber and the poly-α-olefin component in essentially equal proportions by weight, in particular in a ratio of 1:1.

5. Container closure according to any one of Claims 1 to 4,
**characterized in that** the polymer composition contains, as lubricants, very finely dispersed SiO₂, silicone oil and/or an amide wax, in particular erucamide.

6. Container closure according to Claim 1,
**characterized in that** the polymer composition (in per cent by weight, based on total weight) comprises:
| Substance | Generally | Preferred | Particularly preferred |
|---|---|---|---|
| Butylrubber | 40 - 60 | 45 - 52 | 48 |
| HDPE | 40 - 60 | 45 - 52 | 48 |
and also in each case less than 0.5% by weight of lubricant, pigment and stabilizer and less than 5% by weight of talc.

7. Container closure according to one or more of Claims 1 to 6,
**characterized in that** the gasket is constructed as inward-facing insert on one inner surface of the container closure, the surface facing towards the edge of the container to be sealed.

8. Container closure according to Claim 7, in the form of a crown cap,
**characterized in that** the inward-facing insert consists of between about 160 and 250 mg of polymer composition.

9. Container closure according to Claim 7, in the form of a screw cap made from aluminium for bottles,
**characterized in that** the inward-facing insert consists of between about 200 and 320 mg of the polymer composition.

10. Container closure according to Claim 7, in the form of a screw closure made from plastics for bottles,
**characterized in that** the inward-facing insert consists of between about 200 and 400 mg of the polymer composition.

11. Gasket for container closures, in particular bottle closures and glassware closures made from metal or plastic, composed of a polymer composition according to one or more of Claims 1 to 10.

12. Gasket according to Claim 11,
**characterized in that** the gasket, as inward-facing insert for a crown cap closure or a screw closure for bottles, is constructed to resemble approximately a circular disc.

13. Gasket according to Claim 11,
**characterized in that** the gasket is constructed as sealing ring.

14. Use of the polymer composition according to any one of Claims 1 to 6 in container closures as barrier to the ingress of oxygen.

## Revendications

1. Fermeture de récipient avec élément de joint ou joint, en particulier fermeture de type capsule ou à vis, pour des bouteilles, verres et analogues, qui présente à l'état fermé un effet de barrière aux gaz et/ou un effet de vanne ou soupape de surpression ou sécurité et dont l'élément de joint consiste en un composé (ou composition) polymère, comprenant un mélange de caoutchouc butyle et d'un composé de poly-α-oléfine à base de polyéthylène haute densité (HDPE), un agent lubrifiant et des additifs usuels comme des pigments, du talc et des agents stabilisants.

2. Fermeture selon la revendication 1, **caractérisée en ce que** le composé polymère présente une teneur ou une quantité de caoutchouc butyle comprise entre 20 % en poids et 60 % en poids, en particulier entre 30 % en poids et 50 % en poids, par rapport au poids total.

3. Fermeture selon la revendication 1 ou 2, **caractérisée en ce que** le composé polymère présente une teneur ou une quantité de composé de poly-α-oléfine comprise entre 20 % en poids et 70 % en poids, en particulier entre 30 % en poids et 60 % en poids, par rapport au poids total.

4. Fermeture selon l'une quelconque des revendications 1 à 3, **caractérisée en ce que** le composé polymère comprend du caoutchouc butyle et le composé de poly-α-oléfine en parties en poids sensiblement égales, en particulier dans le rapport 1:1.

5. Fermeture selon l'une quelconque des revendications 1 à 4, **caractérisée en ce que** le composé polymère contient comme agent lubrifiant du SiO₂ en dispersion fine, une huile de silicone et/ou une cire d'amide ou céramide, en particulier un amide de l'acide cérutique.

6. Fermeture selon la revendication 1, **caractérisée en ce que** le composé polymère comprend (en pourcent en poids, par rapport au poids total) :
| substance | généralement | de préférence | particulièrement préféré |
|---|---|---|---|
| caoutchouc butyle | 40 - 60 | 45 - 52 | 48 |
| HDPE | 40 - 60 | 45 - 52 | 48 |
ainsi que dans chaque cas moins de 0,5 % en poids d'agent lubrifiant, pigment et agent stabilisant, et moins de 5 % en poids de talc.

7. Fermeture selon l'une ou plusieurs des revendications 1 à 6, **caractérisée en ce que** l'élément de joint est conçu comme un revêtement ou garnissage intérieur placé sur une surface intérieure de la fermeture de récipient tournée vers le bord ou côté du récipient à étanchéifier.

8. Fermeture selon la revendication 7, présentant la forme d'une capsule, **caractérisée en ce que** le revêtement ou garnissage intérieur comprend entre environ 160 et 250 mg de composé polymère.

9. Fermeture selon la revendication 7, présentant la forme d'un bouchon à vis en aluminium pour bouteilles, **caractérisée en ce que** le revêtement ou garnissage intérieur comprend entre environ 200 et 320 mg de composé polymère.

10. Fermeture selon la revendication 7, présentant la forme d'une fermeture à vis en matière plastique pour bouteille, **caractérisée en ce que** le revêtement ou garnissage intérieur comprend entre environ 200 et 400 mg de composé polymère.

11. Elément de joint ou joint pour fermeture de récipient, en particulier fermeture pour des bouteilles ou des verres en métal ou matière plastique, consistant en un composé polymère selon l'une ou plusieurs des revendications 1 à 10.

12. Elément de joint selon la revendication 11, **caractérisé en ce que** l'élément de joint est conçu comme un revêtement ou garnissage intérieur pour une fermeture du type à vis pour bouteille ou à capsule approximativement en forme de rondelle circulaire.

13. Elément de joint selon la revendication 11, **caractérisé en ce que** l'élément de joint est conçu comme une bague ou anneau d'étanchéité.

14. Utilisation d'un composé polymère selon l'une des revendications 1 à 6, dans des fermetures de récipient comme barrière contre l'entrée d'oxygène.
